# EUROPÄISCHE PATENTANMELDUNG

(11) **EP 3 967 662 A1**
(43) Veröffentlichungstag der Anmeldung: **16.03.2022**
(21) Anmeldenummer: 21195901.0
(22) Anmeldetag: 10.09.2021
(51) Int. Cl.: C02F 1/00, B01D 24/12, B01D 35/30, B01D 35/157, B01D 27/02, B01D 27/08

(54) **FILTERPATRONE UND FILTERVORRICHTUNG**

(30) Priorität: 15.09.2020 DE 102020005633
(71) Anmelder: Götz, Christoph, 30179 Hannover (DE)
(72) Erfinder: Götz, Christoph, 30179 Hannover (DE)
(74) Vertreter: Rossmanith, Manfred

(57) **Zusammenfassung**

Es wird eine Filterpatrone zur Filtration von Flüssigkeiten mit einem Gehäuse (203) vorgeschlagen, das Filtermittel und/oder lonentauschermaterial aufnimmt. Das Gehäuse (203) weist eine Einlauföffnung für ungefilterte Flüssigkeit und eine Auslauföffnung für gefilterte Flüssigkeit auf. Das Gehäuse umfasst auf einer Seite einen umlaufenden Dichtrand (207). Die Filterpatrone zeichnet sich dadurch aus, dass die Auslauföffnung in einem unteren Bereich des Gehäuses seitlich in dem Gehäuse angeordnet ist.

## Beschreibung

### Gebiet

Die Erfindung betrifft eine Filterpatrone zur Filtration von Flüssigkeiten sowie eine Vorrichtung zur Filtration von Flüssigkeiten und ein Gerät zur Zubereitung von Heißgetränken mit einer erfindungsgemäßen Filterpatrone.

### Hintergrund

Vorrichtungen zur Filtration von Flüssigkeiten werden häufig dazu eingesetzt, um die Sauberkeit von Wasser zu verbessern und nicht gewünschte gelöste Stoffe zu reduzieren oder ganz zu entfernen. Solche Vorrichtungen werden im Folgenden auch kurz als Filtervorrichtung bezeichnet. Typischerweise ist die Filtervorrichtung hierfür mit einer austauschbaren Filterpatrone ausgerüstet, weil sich im Gebrauch der Filtervorrichtung die Filterpatrone verbraucht. In der Filterpatrone ist für die Reinigung von Rohwasser und Entfernung von gelösten Stoffen ein Filtermedium enthalten, das beispielsweise Aktivkohle und ein lonentauschermaterial in Form eines Granulats umfasst. Die Filtervorrichtung wird zum Beispiel als Tischwasserkrug, als Wassertank eines Gerätes zur Zubereitung von Heißgetränken oder als Wassertank in einem Kühlschrank eingesetzt.

Je nach Qualität des Rohwassers, die von einem Einsatzort der Filtervorrichtung abhängen kann, und den Vorlieben des Benutzers der Filtervorrichtung kann es vorteilhaft sein, die Durchflussmenge des Rohwassers, die pro Zeiteinheit durch die Filterpatrone fließt, unterschiedlich einzustellen. Je nach Durchflussmenge pro Zeiteinheit kommt das Rohwasser unterschiedlich lange mit dem lonentauschermaterial in Kontakt, sodass die Enthärtung des Rohwassers unterschiedlich ist. Es ist daher wünschenswert, die Durchflussmenge bzw. Strömungsmenge pro Zeiteinheit durch eine Filterpatrone beeinflussen zu können.

Aus der EP 1 748 830 A1 ist eine Filtervorrichtung bekannt, die einen Einlauftrichter aufweist, in den eine Filterpatrone eingesetzt wird. An dem Ablauf des Einlauftrichters ist eine Drosseleinrichtung vorgesehen, die die Strömungsmenge pro Zeiteinheit des von der Filterpatrone abgegebenen gefilterten Wassers reduziert und auf diese Weise die maximale Strömungsmenge pro Zeiteinheit unabhängig von der Art der Filterpatrone begrenzt.

Die EP 1 963 230 B1 beschreibt eine Filterpatrone für einen Wasserfilterkrug. Bei solchen Wasserfilterkrügen kann das Problem auftreten, dass nach der Füllung des Wasserfilterkrugs mit Rohwasser zu Beginn des Filtervorganges das Wasser nur eine kurze Verweildauer in der Filterpatrone hat, die im Laufe des Filtervorganges allmählich ansteigt. Die EP 1 963 230 B1 schlägt vor, dieses Problem durch eine Filterpatrone zu lösen, die zwei Kammern aufweist, wobei nur eine erste Kammer mit Filtermaterial gefüllt ist. Das in der ersten Kammer gefilterte Wasser wird in der zweiten Kammer gesammelt und nachdem eine bestimmte Füllstandshöhe in der zweiten Kammer erreicht ist in einen Sammelbehälter abgegeben. Die Füllstandshöhe wird durch eine auf der Bodenwand der zweiten Kammer angeordnete Hülse bestimmt, welche die Auslauföffnung umgibt.

Hiervon ausgehend ist eine Aufgabe der vorliegenden Erfindung, eine alternative Filterpatrone zu schaffen, bei der die Strömungsmenge durch konstruktive Maßnahmen an der Filterpatrone beschränkt ist.

### Beschreibung der Erfindung

Zur Lösung dieser Aufgabe schlägt die Erfindung nach einem ersten Aspekt eine Filterpatrone zur Filtration von Flüssigkeiten vor. Die Filterpatrone umfasst ein Gehäuse, das Filtermittel und/oder lonentauschermaterial aufnimmt. Das Gehäuse weist eine Einlauföffnung für ungefilterte Flüssigkeit und eine Auslauföffnung für gefilterte Flüssigkeit auf und umfasst in einem oberen Bereich einen umlaufenden Dichtrand. Die Filterpatrone zeichnet sich dadurch aus, dass die Auslauföffnung in einem unteren Bereich des Gehäuses seitlich in dem Gehäuse angeordnet ist.

Die seitliche Anordnung der Auslauföffnung hat den Vorteil, dass auch wenn die Patrone mit so großer Kraft in eine Aufnahmekammer eines Einlauftrichters eingepresst wird, dass die Unterseite der Patrone an dem Boden der Aufnahmekammer anliegt, die Auslauföffnung hiervon unbeeinträchtigt bleibt, d.h. das Wasser kann weiterhin ungehindert durch die Patrone strömen.

Bei einer vorteilhaften Ausführungsform ist das Gehäuse in eine erste Kammer und eine zweite Kammer unterteilt. Die erste Kammer ist mit Filtermitteln und/oder Filtermaterial gefüllt und von der zweiten Kammer durch eine wasserdurchlässige Trennwand, insbesondere durch ein Auslaufsieb, getrennt. Die Auslauföffnung der Filterpatrone ist in der zweiten Kammer vorgesehen. Als Filtermaterial können zum Beispiel Aktivkohle und lonentauschermaterialien vorgesehen sein.

Die Unterteilung der Filterpatrone in eine erste und eine zweite Kammer hat den Vorteil, dass das gefilterte Wasser großflächig durch die wasserdurchlässige Trennwand aus der ersten Kammer austreten kann, wodurch die Bildung von Strömungspfaden in dem Filtermaterial vermieden wird. Solche Strömungskanäle bilden sich insbesondere dann, wenn das gefilterte Wasser aus einer Kammer, die das Filtermaterial enthält, nur durch eine kleine Auslassöffnung mit einem Durchmesser von zum Beispiel einem Millimeter oder wenigen Millimetern austreten kann. Strömungspfade haben zur Folge, dass das Filtermaterial in der Filterpatrone nur unvollständig genutzt wird.

Mit Vorteil ist das Gehäuse aus einem becherförmigen Unterteil und einem Oberteil gebildet. Das Unterteil weist einen Anschlussstutzen auf, der die wasserdurchlässige Trennwand umgibt und mit einem Bodendeckel verschließbar ist.

Der Anschlussstutzen bildet die Seitenwände und der Bodendeckel den Boden der zweiten Kammer. An der Oberseite ist die zweite Kammer durch die wasserdurchlässige Trennwand bzw. das Auslaufsieb begrenzt.

Bei einer vorteilhaften Weiterbildung umfasst der Bodendeckel eine geschlossene Deckelfläche und eine innere und eine äußere Ringwand, die insbesondere kreisförmig oder mehreckig sind und die auf der geschlossenen Deckelfläche konzentrisch und zueinander beanstandet angeordnet sind. Der Anschlussstutzen des Gehäuseunterteils ist zwischen der inneren und äußeren Ringwand aufnehmbar.

In diesem Fall können die Ringwände Abstandshalter tragen, um zwischen den Ringwänden des Bodendeckels den Anschlussstutzen des Unterteils aufzunehmen.

Mit Vorteil reichen die Abstandshalter nicht bis zu der geschlossenen Deckelfläche des Bodendeckels , um einen ersten und einen zweiten Ringkanal zwischen den Ringwänden zu bilden, und einen Wasserfluss in dem ersten und dem zweiten Ringkanal nicht behindern. Die Abmessungen der Abstandshalter sind geeignet, den Querschnitt des ersten und des zweiten Ringkanals zu definieren, womit im Bedarfsfall die Strömungsmenge des gefilterten Wassers durch die Ringkanäle begrenzbar ist.

Bei einer zweckmäßigen Weiterbildung weist der Anschlussstutzen einen Spalt auf, der den ersten Ringkanal strömungsmäßig mit dem zweiten Ringkanal verbindet. Gleichzeitig bietet der Spalt in dem Anschlussstutzen die Möglichkeit eine wirksame Durchflussbegrenzung für die Filterpatrone zu realisieren.

Gemäß einer vorteilhaften Weiterbildung weist die innere Ringwand einen Spalt auf, der den von der inneren Ringwand begrenzten Innenraum strömungsmäßig mit einem oder mehreren Spalten in der äußeren Ringwand verbindet, wobei der oder die Spalte die seitliche Auslauföffnung bildet bzw. bilden.

Bei einer Weiterbildung der Filterpatrone weist das Unterteil zwei oder mehr wasserdurchlässige Trennwände bzw. Auslasssiebe aufweist, die jeweils von einem Anschlussstutzen umgeben sind, die jeweils mit einem Bodendeckel verschließbar sind. Durch eine Erhöhung der Anzahl der Trennwände ist es möglich, die Filterleistung der Filterpatrone zu steigern.

Nach einem zweiten Aspekt schlägt die Erfindung eine Vorrichtung zur Filtration von Flüssigkeiten mit einer Filterpatrone gemäß dem ersten Aspekt der Erfindung vor. Die Vorrichtung weist ein Gefäß auf, das gefilterte Flüssigkeit aufnimmt, sowie einen Einlauftrichter, der in das Gefäß eingesetzt ist und ungefilterte Flüssigkeit aufnimmt. Der Einlauftrichter umfasst eine Aufnahmekammer für die Filterpatrone, deren Dichtrand die Aufnahmekammer dicht verschließt.

Schließlich schlägt die Erfindung nach einem dritten Aspekt ein Gerät zur Zubereitung von Getränken, insbesondere Heißgetränken, mit einer Filterpatrone gemäß dem ersten Aspekt der Erfindung vor.

### Kurze Beschreibung der Zeichnung

Nachfolgend wird die Erfindung anhand einer Ausführungsform unter Bezugnahme auf die begleitenden Figuren exemplarisch näher erläutert. Alle Figuren sind rein schematisch und nicht maßstäblich. Es zeigen:
- Fig. 1: eine Filtervorrichtung in Gestalt eines Wasserkruges in einer perspektivischen Ansicht;
- Fig. 2: eine perspektivische Ansicht einer Filterpatrone schräg von oben;
- Fig. 3A: eine perspektivische Ansicht eines Gehäuseunterteils der Filterpatrone aus Figur 2 schräg von unten;
- Fig. 3B: eine perspektivische Ansicht eines Gehäuseunterteils der Filterpatrone aus Figur 3A schräg von oben;
- Fig. 3C: ein Querschnitt durch das Gehäuseunterteil aus Figur 3A;
- Fig. 4A: eine perspektivische Ansicht eines Bodendeckels schräg von oben;
- Fig. 4B: eine perspektivische Ansicht des Bodendeckels aus Figur 4A schräg von unten;
- Fig. 4C: eine Draufsicht auf die Oberseite des Bodendeckels aus Figur 4A;
- Fig. 4D: ein Querschnitt des Bodendeckels entlang der Linie D-D in Figur 4C;
- Fig. 4E: ein Querschnitt eines alternativen Bodendeckels entlang der Linie D-D in Figur 4C
- Fig. 5A: eine schematische Darstellung des Wasserflusses in einer zweiten Kammer einer ersten erfindungsgemäßen Filterpatrone;
- Fig. 5B: eine schematische Darstellung des Wasserflusses in einer zweiten Kammer einer zweiten erfindungsgemäßen Filterpatrone;
- Fig. 6: schematische Darstellung des Wasserflusses in der Aufnahmekammer der Filtervorrichtung aus Figur 1; und
- Fig. 7: ein zweites Ausführungsbeispiel einer Filterpatrone im Querschnitt.

Gleiche oder ähnliche Elemente sind in den Figuren mit gleichen oder ähnlichen Bezugszeichen versehen.

### Ausführungsbeispiel

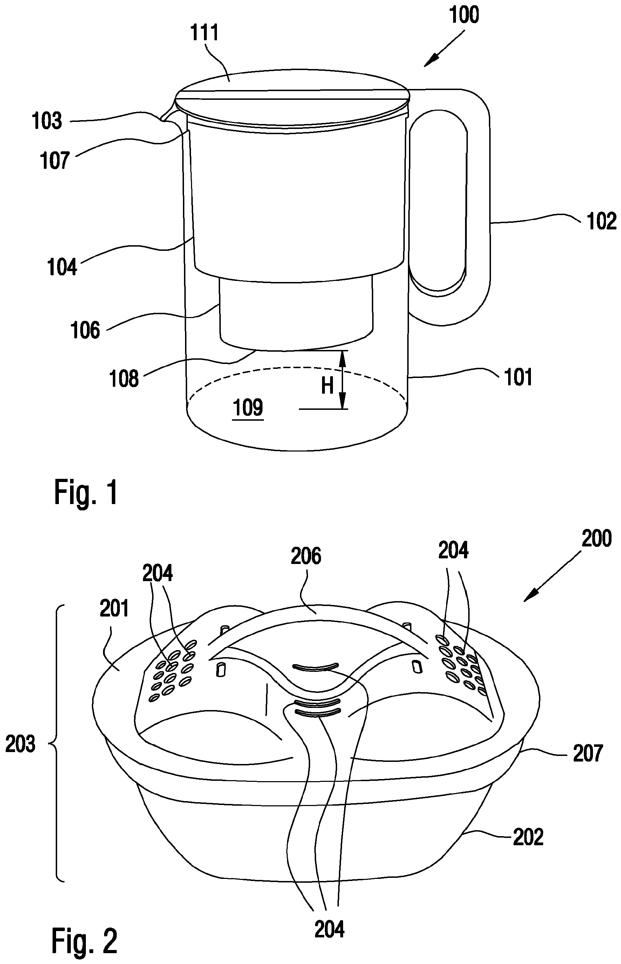

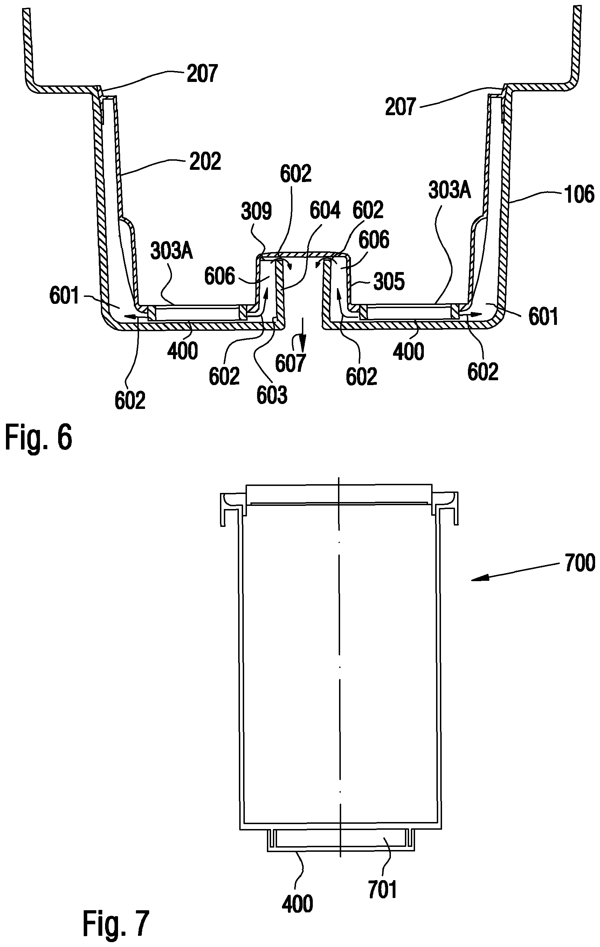

Figur 1 zeigt in einer perspektivischen Ansicht von der Seite ein Ausführungsbeispiel einer erfindungsgemäßen Vorrichtung 100 zur Filtration von Flüssigkeiten. Die Vorrichtung 100 ist bei dem dargestellten Ausführungsbeispiel als Tischwasserkrug ausgebildet und weist ein Gefäß 101 zur Aufnahme von gefiltertem Wasser auf. An dem Gefäß 101 ist zu seiner Handhabung ein Griff 102 angeordnet. Weiterhin weist das Gefäß 101 an seinem oberen Rand eine Ausgießtülle 103 auf. Im Gebrauch der Vorrichtung kann ein Benutzer das Gefäß 101 an dem Griff 102 fassen und über die Ausgießtülle 103 gefiltertes Wasser beispielsweise in ein Glas (nicht dargestellt) ausgießen. In das Gefäß 101 ist ein oben offener Einlauftrichter 104 eingesetzt, der in seinem unteren Bereich eine Aufnahmekammer 106 für eine Filterpatrone 200 (Figur 2) aufweist. Der Einlauftrichter 104 weist an seinem oberen Rand einen umlaufenden Flansch 107 auf, der auf der Oberkante des Gefäßes 101 aufliegt, so dass der Einlauftrichter 104 in dem Gefäß 101 gehaltert ist. Ein Boden 108 des Einlauftrichters 104 hat dabei einen Abstand H von einem Boden 109 des Gefäßes 101. Der Boden 108 des Einlauftrichters 104 weist einen Rohransatz 603 (Figur 6) auf, der eine Auslauföffnung bildet, aus der gefiltertes Wasser aus dem Einlauftrichter 104 in das Gefäß 101 fließt. Der Einlauftrichter 104 ist auf seiner Oberseite mit einem abnehmbaren Deckel 111 verschlossen, der verhindert, dass im Gebrauch der Filtervorrichtung 100 Staub oder Schmutzpartikel in den Einlauftrichter 104 hineinfallen. Die Funktionsweise der Filtervorrichtung 100 wird im Folgenden noch näher erläutert.

In Figur 2 ist eine schematische perspektivische Ansicht schräg von oben auf eine Filterpatrone 200 dargestellt. Ein Gehäuseoberteil 201 bildet eine Oberseite der Filterpatrone 200, das auf einem becherförmigen Gehäuseunterteil 202 sitzt. Das Gehäuseoberteil 201 und das Gehäuseunterteil 202 bilden gemeinsam ein Gehäuse der Filterpatrone 200, das als Ganzes mit dem Bezugszeichen 203 bezeichnet ist. In dem Gehäuse 203 der Filterpatrone ist Filtermaterial aufgenommen. Das Filtermaterial liegt zum Beispiel als Filtergranulat vor. Es können auch unterschiedliche Filtermaterialien zum Einsatz kommen, um Partikel, unerwünschte Ionen und/oder Bakterien aus dem Wasser zu entfernen. Das Gehäuseoberteil 201 weist eine Mehrzahl von Einlauföffnungen 204 auf, durch die ungefilterte Flüssigkeit, insbesondere Wasser, in das Innere der Filterpatrone 200 strömt. Ein Griffteil 206 ermöglicht es, die Filterpatrone 200 zu fassen und für einen allfälligen Wechsel der Filterpatrone 200 aus der Aufnahmekammer 106 des Einlauftrichters 104 herauszuziehen. Am oberen Rand des Gehäuseunterteils 201 ist ein Dichtrand 207 erkennbar.

Das Gehäuseunterteil hat eine im Wesentlichen ovale Form, die in Längsrichtung zum Beispiel 70-80 mm und in Querrichtung 40-50 mm lang ist.

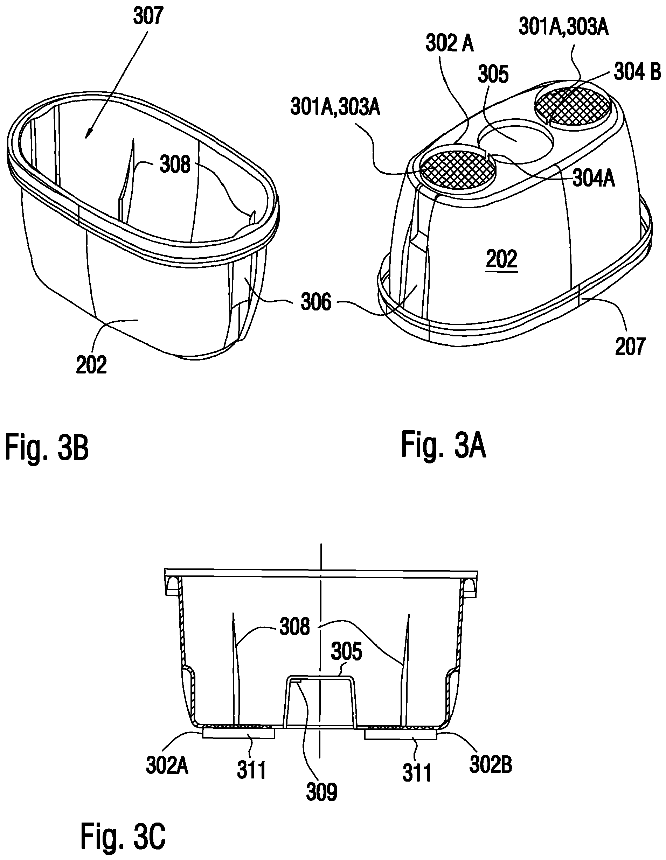

In Figur 3A ist eine perspektivische Ansicht schräg von unten auf das Gehäuseunterteil 202 dargestellt. Das becherförmige Gehäuseunterteil 202 weist an seiner Unterseite zwei Auslauföffnungen 301A und 301B auf, die jeweils von einem Anschlussstutzen 302A und 302B umgeben sind. Die Auslauföffnungen 302A und 302B sind durch Auslaufsiebe 303A, 303B verschlossen, deren Maschen so fein sind, dass kein Filtergranulat aus dem Inneren des becherförmigen Gehäuseunterteils 202 austreten kann. Die Auslaufsiebe 303A, 303B bilden eine wasserdurchlässige Trennwand, die in anderen Ausführungsbeispielen auch anders realisiert ist, beispielsweise durch ein Vlies. Die Anschlussstutzen 302A, 302B weisen jeweils einen Spalt 304A, 304B auf.

Zwischen den Auslauföffnungen 301A und 301B ist eine Einstülpung 305 in dem Gehäuseunterteil 202 vorgesehen, deren Funktion im Folgenden noch näher beschrieben wird. An seinen schmalen Seiten weist das Gehäuseunterteil 202 jeweils eine Führungsnut 306 auf, von denen in Figur 3A jedoch nur eine sichtbar ist. Die Führungsnuten wirken mit entsprechenden Führungsleisten (nicht dargestellt) in der Aufnahmekammer 106 des Einlauftrichters 104 zusammen, wenn die Filterpatrone 200 in die Aufnahmekammer 106 eingesetzt ist. Auf diese Weise wird eine stabile Einbaulage der Filterpatrone 200 in der Aufnahmekammer 106 unterstützt.

Figur 3B zeigt das Gehäuseunterteil 202 aus Figur 3A in einer perspektivischen Ansicht von oben. Das Filtermaterial, mit dem das Gehäuseunterteil einer funktionsfähigen Filterpatrone gefüllt ist, ist in der Darstellung der Figur 3B der Übersicht halber weggelassen worden. Der Innenraum des Gehäuseunterteils bildet eine erste Kammer 307 der Filterpatrone. Das Gehäuseunterteil 202 weist innen auf seinen Längsseiten jeweils zwei Versteifungsrippen 308 auf, welche die Stabilität des Gehäuseunterteils 202 verbessern. Bei anderen Ausführungsformen des Gehäuseunterteils 202 können auch weniger oder mehr als zwei Versteifungsrippen 308 vorgesehen sein bzw. auch ganz andere Strukturelemente verwendet sein, um die mechanische Stabilität des Gehäuseunterteils 202 zu erhöhen.

In Figur 3C ist ein Querschnitt des Gehäuseunterteil aus Figur 3A dargestellt. In dieser Darstellung ist die Struktur der Einstülpung 305 gut zu erkennen. In dieser Querschnittsdarstellung ist eine Abstandsrippe 309 sichtbar, von denen beispielsweise drei oder mehr in der Einstülpung 305 angeordnet sind. Die Funktion der Abstandsrippen 309 wird im Zusammenhang mit Figur 6 weiter unten erläutert.

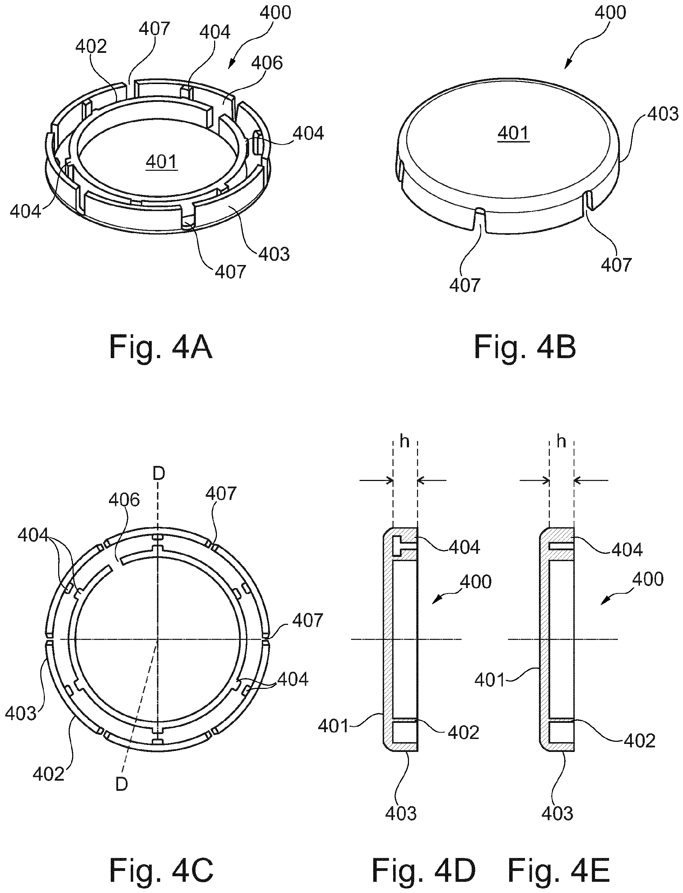

In Figur 4A ist ein Bodendeckel 400 in einer perspektivischen Ansicht schräg von oben dargestellt, von denen jeweils einer auf die Anschlussstutzen 302A bzw. 302B aufgesetzt wird. Wenn auf die Anschlussstutzen 302A bzw. 302B Bodendeckel 400 aufgesetzt sind, dann bildet der entstehende Hohlraum jeweils eine zweite Kammer 311 der Filterpatrone.

Der Bodendeckel 400 weist eine flache geschlossene und kreisförmige Bodenwand 401 auf. Von dieser Bodenwand erheben sich eine innere und eine äußere Ringwand 402,403 und sind in Bezug auf die Hauptfläche der Bodenwand 401 senkrecht orientiert. Die innere und die äußere Ringwand 402,403 haben die gleiche Höhe h (Figur 4D) in Bezug auf die Bodenwand 401. Auf der in radialer Richtung außen liegenden Seite der inneren Ringwand 402 und der innen liegenden Seite der äußeren Ringwand 403 sind Abstandshalter 404 angeordnet, die an einem Anschlussstutzen anliegen, wenn der Bodendeckel 400 auf einen der Anschlussstutzen 302A, 302B aufgesetzt ist. Darüber hinaus weist die innere Ringwand 402 einen Spalt 406 und die äußere Ringwand 403 eine Mehrzahl von Spalten 407 auf.

Figur 4B zeigt den Bodendeckel 400 in einer perspektivischen Ansicht von unten, in welcher die Bodenwand 401 und mehrere Spalte 407 in der äußeren Ringwand 403 sichtbar sind.

In Figur 4C ist eine Draufsicht auf die Oberseite des Bodendeckels 400 dargestellt und zeigt den Spalt 406 in der inneren Ringwand 402, die Spalte 407 in der äußeren Ringwand 403 und die Abstandshalter 404 aus einer anderen Perspektive.

Figur 4D zeigt eine Schnittdarstellung durch den Bodendeckel 400 entlang einer Linie D-D aus Figur 4C. In Bezug auf eine Hauptfläche der kreisförmigen Bodenwand 401 haben die innere Ringwand 402 und die äußere Ringwand 403 eine Höhe h. In Figur 4D ist gut zu erkennen, dass die Abstandshalter 404 nicht ganz bis zur Bodenwand 401 reichen.

Bei einer anderen in Figur 4E dargestellten Ausführungsform reichen die Abstandshalter 404 ganz bis zur Bodenwand 401.

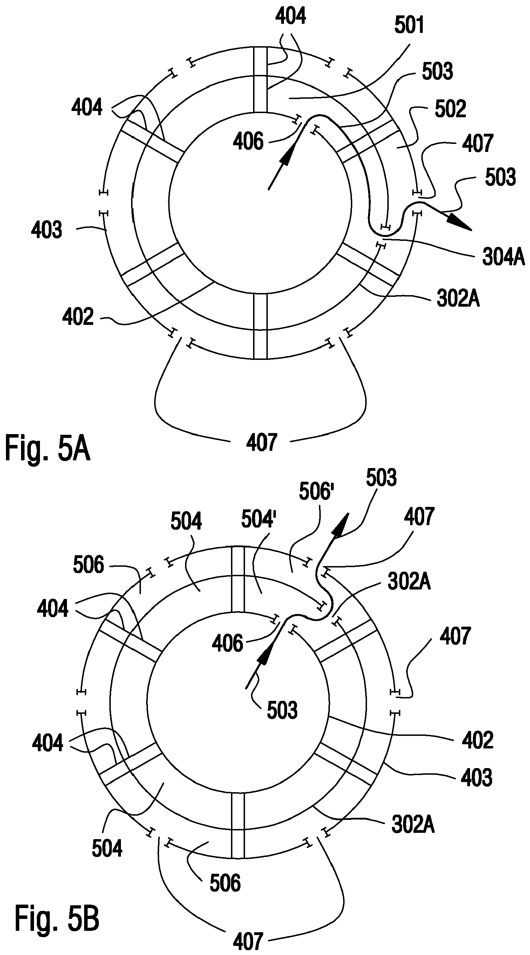

Figur 5A zeigt eine schematische Darstellung eines Wasserflusses in einer zweiten Kammer der Filterpatrone aus Figur 2. Die zweite Kammer 311 ist durch die kreisförmige Bodenwand 401, das Auslaufsieb 303A und den Anschlussstutzen 302A begrenzt. Die zweite Kammer 311 bildet somit einen zylinderförmigen Hohlraum. Bei aufgesetztem Bodendeckel 400 ist der Anschlussstutzen 302A von der inneren Ringwand 402 in radialer Richtung nach außen beanstandet, wobei der Abstand durch die Abstandshalter 404 definiert ist. Noch weiter in radialer Richtung nach außen umgibt die äußere Ringwand 403 den Anschlussstutzen 302A. Der Abstand zwischen dem Anschlussstutzen 302A und der äußeren Ringwand ist wiederum durch Abstandshalter 404 festgelegt. In anderen Worten gesagt, ist der Anschlussstutzen 302A zwischen den Abstandshaltern 404 des Bodendeckels 400 eingeklemmt, womit ein Klemmsitz des Bodendeckels 400 auf dem Anschlussstutzen 302A erreicht ist. Da die Abstandshalter 404 sich nicht über die gesamte Höhe h der inneren Ringwand 402 bzw. der äußeren Ringwand 403 erstrecken (Figur 4D), entstehen zwischen der inneren Ringwand 402 und dem Anschlussstutzen 302A ein erster ringförmiger Strömungskanal 501 und zwischen dem Anschlussstutzen 302A und der äußeren Ringwand 403 ein zweiter Strömungskanal 502. Es wird angemerkt, dass die Abstände zwischen der inneren Ringwand 402 und dem Anschlussstutzen 302A einerseits und der äußeren Ringwand 403 und dem Anschlussstutzen 302A zur besseren Klarheit in Figur 5 übertrieben groß dargestellt sind. Die Darstellung in Figur 5 ist keinesfalls maßgeblich zu verstehen.

Das in der ersten Kammer 307 der Filterpatrone gefilterte Wasser strömt in die zweite Kammer 311 in einen Bereich ein, der umfangsmäßig von der inneren Ringwand 402 begrenzt ist. Von dort strömt das gefilterte Wasser durch den Spalt 406 in den ersten Ringkanal 501 und von dort durch den Spalt 304A in dem Anschlussstutzen 302A in den zweiten Ringkanal 502 ein und verlässt die zweite Kammer der Filterpatrone durch die Spalte 407 in der äußeren Ringwand 403. Der Strömungsweg des gefilterten Wassers durch die zweite Kammer 311 der Filterpatrone ist durch einen Pfeil 503 dargestellt. Die Spalte 407 bilden seitliche Auslauföffnungen.

Unabhängig davon, in welcher Winkelposition der Bodendeckel 400 aufgesetzt wird, findet das gefilterte Wasser durch den ersten und zweiten Ringkanal 501,502 immer einen Weg zu einem oder mehreren der Spalte 407.

Bei der in Figur 4E gezeigten Ausführungsform des Bodendeckels 400, bei der die Abstandshalter 404 bis zur Bodenwand 401 reichen, werden keine Ringkanäle ausgebildet, sondern es entstehen innere und äußere Abschnitte 504,506, die in Figur 5B dargestellt sind und den Wasserfluss durch die zweite Kammer 311 veranschaulicht. Die inneren Abschnitte 504 werden in Umfangsrichtung einerseits von der inneren Ringwand 402 und andererseits von dem Anschlussstutzen 302A begrenzt. Die äußeren Abschnitte 506 werden einerseits von dem Anschlussstutzen 302A und andererseits von der äußeren Ringwand 403 begrenzt. In radialer Richtung werden sowohl die inneren als auch die äußeren Abschnitte 504,506 von den Abstandshaltern 404 begrenzt. Wenn nur ein einziger Spalt 406 in der inneren Ringwand 402 vorhanden ist, dann strömt gefiltertes Wasser nur in einen einzigen inneren Abschnitt der mit dem Bezugszeichen 504' bezeichnet ist. Damit das gefilterte Wasser weiter strömen kann, ist es erforderlich, dass sich der Spalt 304A des Anschlussstutzens 302A in dem inneren Abschnitt 504' befindet, wie es in Figur 5B dargestellt ist. Das setzt voraus, dass der Bodendeckel 400 in einer entsprechenden Drehstellung montiert ist. Um dies zu erreichen, ist bei dieser Ausführungsform an dem Bodendeckel 400 eine Markierung (nicht dargestellt) vorgesehen, die zum Beispiel bei der Montage zu den Nuten 306 des Bodenteils 202 hin orientiert wird. Die Markierung ist zum Beispiel eine Einkerbung oder ein vorspringendes Element, das sowohl für einen Menschen als auch für einen Roboter mittels Bildverarbeitung erkennbar ist. Von dem inneren Abschnitt 504' fließt das Wasser durch den Spalt 304A in dem Anschlussstutzen 302A in einen äußeren Abschnitt 506' und dann durch einen Spalt 407 aus der Filterpatrone hinaus.

Bei einer weiteren nicht dargestellten Ausführungsform des Bodendeckels 400, bei der die Abstandshalter 404 bis zu der Bodenwand 401 reichen, sind in der Innenwand 402 mehrere Spalte 406 vorgesehen, die jeweils einem Spalt 407 in der Außenwand 403 gegenüber liegen. Die Spalte 406 sind in Umfangsrichtung zwischen den Abstandshaltern 404 angeordnet, so dass jeder innere Abschnitt 504 einen Spalt 406 aufweist. Bei dieser Ausführungsform ist ein Strömungsweg für das gefilterte Wasser gebildet, unabhängig davon, in welchem Abschnitt der Spalt 304A in dem Anschlussstutzen 302A zu liegen kommt. Es genügt zu vermeiden, dass ein Paar von einander gegenüber stehenden Abstandshaltern 404 genau an der Position des Spaltes 304A zu liegen kommen, damit der Spalt 304A nicht verschlossen wird. Zu diesem Zweck kann eine entsprechende Markierung auf dem Bodendeckel 400 vorgesehen sein.

Bei noch einer weiteren ebenfalls nicht dargestellten Ausführungsform des Bodendeckels 400 sind die Ringwände 302,304 und die Anschlussstutzen 302A, 302B mehreckig, insbesondere 6- oder 8-eckig ausgebildet. Bei dieser Ausführungsform sind nur bestimmte Drehstellungen des Bodendeckels 400 möglich, wodurch sich bestimmte relative Positionen der Spalte 306,307 und 302A zueinander ergeben.

Die andere zweite Kammer 311 der Filterpatrone ist in entsprechender Weise aufgebaut.

Die Struktur der zweiten Kammer 311 der Filterpatrone eröffnet eine Reihe von Optionen wie die Durchflussmenge pro Zeit durch die Filterpatrone festgelegt werden kann. Zu diesen Möglichkeiten gehören wenigstens
(a) die Dimensionierung des Spaltes 406 bzw. der Spalte 406 in der ersten Ringwand 402;
(b) die Dimensionierung der Spalte 304A bzw. 304B in den Anschlussstutzen 302A bzw. 302B;
(c) die Dimensionierung der Spalte 407 in der zweiten Ringwand 403;
(d) die Dimensionierung der Abstandshalter 404, um den Querschnitt des ersten und/oder zweiten Ringkanals 501,502 zu verändern;
(e) Erhöhung oder Verringerung der Anzahl der Spalte 304A, 304B, 406 und 407; und
(f) Veränderung der Wasserdurchlässigkeit der wasserdurchlässigen Trennwand 303A, 303B zwischen der ersten und zweiten Kammer 307, 311 der Filterpatrone.

Diese Aufzählung ist beispielhaft und stellt keine abschließende Liste sämtlicher Möglichkeiten dar, die dem Fachmann zur Verfügung stehen, um die Durchflussmenge pro Zeit durch die Filterpatrone an unterschiedliche Einsatzbedingungen der Filterpatrone anzupassen. Beispielsweise ist es durch unterschiedlich gestaltete Bodendeckel 400 auf einfache Weise möglich, Filterpatronen mit unterschiedlichen Durchflussmengen pro Zeit zu realisieren. Hierbei kann der Rest der Patrone unverändert bleiben was unter anderem Kostenvorteile bei der Herstellung solcher Patronen mit sich bringt.

Ergänzend wird erwähnt, dass in anderen Ausführungsbeispielen in den Anschlussstutzen 302A,302B mehrere Spalte 304A bzw. 304B vorgesehen sein können.

In Figur 6 ist die Aufnahmekammer 106 des Einlauftrichters 104 mit einer eingesetzten Filterpatrone 200 im Querschnitt dargestellt, wobei der Übersichtlichkeit halber nur das Gehäuseunterteil 202 der Filterpatrone gezeigt ist. Das gefilterte Wasser strömt durch die Spalte 407 in horizontaler Richtung aus der Filterpatrone aus und in einen Zwischenraum 601, der zwischen dem Gehäuseunterteil 202 der Filterpatrone und der Aufnahmekammer 106 gebildet ist. Die Strömungsrichtung ist durch Pfeile 602 veranschaulicht. Die Aufnahmekammer 104 weist mittig einen Rohransatz 603 auf, auf dessen Stirnseite 604 die Abstandsrippen 309 aufliegen, wenn die die Filterpatrone 200 vollständig in die Aufnahmekammer 104 eingesetzt ist. Die Einstülpung 305 nimmt den Rohransatz 603 auf. Der Durchmesser der Einstülpung 305 ist größer als der Durchmesser des Rohransatzes 603, so dass zwischen Rohransatz 603 und Einstülpung 305 ein Ringraum 606 entsteht. Die Abstandsrippen 309 in der Einstülpung 305 bilden im Zusammenwirken mit dem Rohransatz 603 einen Anschlag, der die Einsetzbewegung der Filterpatrone in vertikaler Richtung begrenzt und dem Benutzer eine haptische Rückmeldung gibt, dass die Filterpatrone 200 richtig in der Aufnahmekammer 106 sitzt. Das aus der Filterpatrone 200 ausströmende gefilterte Wasser ist durch einen Pfeil 607 veranschaulicht. Um die Darstellung nicht zu überfrachten, sind in Figur 6 die Ringwände 402, 403 der Bodendeckel 400 nicht gezeigt.

Während eines Filtervorganges füllt das gefilterte Wasser den Zwischenraum 601 und den Ringraum 606 auf und steigt bis zu einer Höhe an, die der Länge des Rohransatzes 603 entspricht. Wenn der Füllstand des gefilterten Wassers diese Höhe überschreitet, dann strömt das Wasser an den Abstandsrippen 309 vorbei in das Innere des Rohransatzes 603 und verlässt auf diesem Weg in Richtung des Pfeiles 607 den Einlauftrichter 104, um sich in dem Gefäß 101 zu sammeln.

Die Erfindung wurde anhand von Filterpatronen beschrieben, die zwei zweite Kammern 311 aufweisen. Grundsätzlich ist die Erfindung aber auch für Filterpatronen anwendbar, die nur eine einzige oder mehr als zwei zweite Kammern 311 aufweisen.

In Figur 7 ist ein Ausführungsbeispiel einer Filterpatrone 700 dargestellt, die nur eine einzige zweite Kammer 701 aufweist. Die zweite Kammer 701 ist genauso aufgebaut, wie die zweite Kammern 311 der Filterpatrone 200. Der Übersichtlichkeit halber ist der Bodendeckel 400 in Figur 7 vereinfacht dargestellt.

Die Erfindung wurde im Zusammenhang mit einer Filtervorrichtung in Gestalt eines Tischwasserkruges beschrieben, ist aber gleichermaßen für Wassertanks von Geräten zur Zubereitung von Heißgetränken geeignet, wie zum Beispiel Kaffeevollautomaten. Dasselbe gilt für Wassertanks in Kühlschränken usw.

In den Ansprüchen schließen die Wörter "aufweisen" und "umfassen" nicht andere Elemente oder Schritte aus und der unbestimmte Artikel "ein" schließt eine Mehrzahl nicht aus.

**Bezugszeichenliste**

| | | | |
|---|---|---|---|
| 100 | Filtervorrichtung | 309 | Abstandsrippe |
| 101 | Gefäß | 311 | zweite Kammer |
| 102 | Griff | | |
| 103 | Ausgießtülle | | |
| 104 | Einlauftrichter | 400 | Bodendeckel |
| | | 401 | Bodenwand |
| 106 | Aufnahmekammer | 402 | innere Ringwand |
| 107 | umlaufender Flansch | 403 | äußere Ringwand |
| 108 | Einlauftrichterboden | 404 | Abstandshalter |
| 109 | Gefäßboden | | |
| | | 406 | Spalt |
| 111 | Deckel | 407 | Spalt |
| | | | |
| 200 | Filterpatrone | 501 | Strömungskanal |
| 201 | Gehäuseoberteil I | 502 | Strömungskanal |
| 202 | Gehäuseunterteil | 503 | Pfeil (Strömungsrichtung) |
| 203 | Gehäuse als Ganzes | 504, 504' | innerer Abschnitt |
| 204 | Einlauföffnungen | | |
| | | 506, 506' | äußerer Abschnitt |
| 206 | Griffteil | | |
| 207 | Dichtrand | | |
| | | 601 | Zwischenraum |
| 301A,B | Auslauföffnung | 602 | Pfeil (Strömungsrichtung) |
| 302A,B | Anschlussstutzen | 603 | Rohransatz |
| 303A,B | Auslaufsieb | 604 | Stirnseite |
| 304A,B | Spalt | | |
| 305 | Einstülpung | 606 | Ringraum |
| 306 | Führungsnut | 607 | Pfeil |
| 307 | erste Kammer | | |
| 308 | Versteifungsrippe | 700 | Filterpatrone |

## Patentansprüche

1. Filterpatrone (300) zur Filtration von Flüssigkeiten mit einem Gehäuse(201,301), das Filtermittel und/oder lonentauschermaterial aufnimmt, wobei das Gehäuse (201,301) eine Einlauföffnung (302) für ungefilterte Flüssigkeit und eine Auslauföffnung (403A,403B) für gefilterte Flüssigkeit aufweist und in einem oberen Bereich einen umlaufenden Dichtrand (202)umfasst, **dadurch gekennzeichnet, dass** die Auslauföffnung (407) in einem unteren Bereich des Gehäuses seitlich in dem Gehäuse angeordnet ist.

2. Filterpatrone nach Anspruch 1, **dadurch gekennzeichnet, dass** das Gehäuse in eine erste Kammer 307) und eine zweite Kammer (311) unterteilt ist, dass die erste Kammer (307) mit Filtermaterial gefüllt und von der zweiten Kammer (311) durch eine wasserdurchlässige Trennwand; insbesondere durch ein Auslaufsieb (303A,303B), getrennt ist und dass die Auslauföffnung (407) in der zweiten Kammer (311) vorgesehen ist.

3. Filterpatrone nach Anspruch 1, **dadurch gekennzeichnet, dass** das Gehäuse (203) aus einem becherförmigen Gehäuseunterteil (202) und einem Gehäuseoberteil (201) gebildet ist und dass das Gehäuseunterteil einen Anschlussstutzen (302A,302B) aufweist, der die wasserdurchlässige Trennwand (303A,303B) umgibt und mit einem Bodendeckel (400) verschließbar ist.

4. Filterpatrone nach einem der vorstehenden Ansprüche, **dadurch gekennzeichnet, dass** der Bodendeckel (400) eine geschlossene Deckelfläche (401) und eine innere und eine äußere Ringwand (402,403) umfasst, die insbesondere kreisförmig oder mehreckig sind und die auf der geschlossenen Deckelfläche (401) konzentrisch und zueinander beanstandet angeordnet sind, wobei der Anschlussstutzen (302A,302B) zwischen der inneren und äußeren Ringwand (402,403) aufnehmbar ist.

5. Filterpatrone nach Anspruch, **dadurch gekennzeichnet, dass** die Ringwände (402,403) Abstandshalter (404) tragen, um zwischen den Ringwänden (402,403) des Bodendeckels (400) den Anschlussstutzen (302A,302B) des Gehäuseunterteils (202) aufzunehmen.

6. Filterpatrone nach Anspruch 5, **dadurch gekennzeichnet, dass** die Abstandshalter (404) nicht bis zu der geschlossenen Deckelfläche (401) des Bodendeckels (400) reichen, um einen ersten und einen zweiten Ringkanal (501,502) zwischen den Ringwänden (402,403) zu bilden, und einen Wasserfluss in dem ersten und dem zweiten Ringkanal (501,502) nicht behindern.

7. Filterpatrone nach einem der vorstehenden Ansprüche, **dadurch gekennzeichnet, dass** die innere Ringwand (402) einen Spalt (406) aufweist, der den von der inneren Ringwand (402) begrenzten Innenraum strömungsmäßig mit einem oder mehreren Spalten (407) in der äußeren Ringwand (403) verbindet, wobei der oder die Spalte (407) die seitliche Auslauföffnung bildet bzw. bilden.

8. Filterpatrone nach Anspruch 7, **dadurch gekennzeichnet, dass** der Anschlussstutzen (302A,302B) einen Spalt (304A,304B) aufweist, der den Spalt (306) in der ersten Ringwand (402) strömungsmäßig mit mindestens einem der Palte /407) in der zweiten Ringwand (403) verbindet.

9. Filterpatrone nach einem der vorstehenden Ansprüche, **dadurch gekennzeichnet, dass** das Gehäuseunterteil (202) zwei oder mehr wasserdurchlässige Trennwände bzw. Auslasssiebe (303A,303B) aufweist, die jeweils von einem Anschlussstutzen (302A,302B) umgeben sind, die jeweils mit einem Bodendeckel (400) verschließbar sind.

10. Vorrichtung (100) zur Filtration von Flüssigkeiten mit einer Filterpatrone (300) nach einem der vorstehenden Ansprüche und mit einem Gefäß (101), das gefilterte Flüssigkeit aufnimmt sowie mit einem Einlauftrichter (104), der in das Gefäß (101) eingesetzt ist und ungefilterte Flüssigkeit aufnimmt, wobei der Einlauftrichter (104) eine Aufnahmekammer (106) für die Filterpatrone (300) aufweist, deren Dichtrand (202) die Aufnahmekammer (106) dicht verschließt.

11. Gerät zur Zubereitung von Getränken, insbesondere Heißgetränken, mit einer Filterpatrone (200) nach einem der Ansprüche 1 bis 9.
